(19) Europäisches Patentamt
European Patent Office
Office européen des brevets

(11) **EP 4 583 349 A1**

(12) **EUROPEAN PATENT APPLICATION**
published in accordance with Art. 153(4) EPC

(43) Date of publication:
**09.07.2025 Bulletin 2025/28**

(21) Application number: 23859220.8

(22) Date of filing: **23.08.2023**

(51) International Patent Classification (IPC):
***H02J 3/36*** *(2006.01)*     ***H02J 3/38*** *(2006.01)*

(52) Cooperative Patent Classification (CPC):
Y02E 10/76

(86) International application number:
**PCT/CN2023/114496**

(87) International publication number:
**WO 2024/046187 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 CN 202211055129**

(71) Applicants:
• **State Grid Smart Grid Research Institute Co., Ltd.
Beijing 102209 (CN)**
• **State Grid
Fujian Electric Power Research Institute
Fuzhou, Fujian 350007 (CN)**
• **State Grid Corporation of China
Beijing 100031 (CN)**

(72) Inventors:
• **YANG, Jie
Beijing 102209 (CN)**
• **WANG, Sichao
Beijing 102209 (CN)**
• **YANG, Yuexi
Beijing 102209 (CN)**
• **LI, Chunpeng
Beijing 102209 (CN)**
• **HAN, Congda
Beijing 102209 (CN)**
• **ZHANG, Hanbin
Beijing 102209 (CN)**
• **HUANG, Junwei
Beijing 102209 (CN)**
• **LIN, Guodong
Beijing 102209 (CN)**

(74) Representative: **Huang, Liwei
Cäcilienstraße 12
40597 Düsseldorf (DE)**

(54) **TRANSIENT STRESS SUPPRESSION METHOD AND APPARATUS FOR GRID FORMING TYPE CONVERTER**

(57)     The present invention relates to the technical field of grid connection of new energy power generation, and particularly provides a method and an apparatus for suppressing transient stress for a grid-connection converter, comprising: on basis of a DC voltage deviation and an AC current deviation of the grid-forming converter, generating a phase command and a voltage amplitude command, respectively; on basis of the phase command and the voltage amplitude command, generating a sinusoidal pulse width modulation signal for controlling the grid-forming converter. The technical solution provided by the present invention can ensure the system stability of the grid-forming converter and effectively deal with the problems of DC voltage over-limit and transient over-current of the system that may occur during a transient response.

on basis of a DC voltage deviation and an AC current deviation of the grid-forming converter, generating a phase command and a voltage amplitude command, respectively    S101

on basis of the phase command and the voltage amplitude command, generating a SPWM signal for controlling the grid-forming converter    S102

Fig. 2

## Description

### CROSS-REFERENCE TO RELATED APPLICATIONS

The present invention is based on the Chinese patent application with application number of 202211055129.3, application date of August 31, 2022, and application title of "METHOD AND APPARATUS FOR SUPPRESING TRANSIENT STRESS FOR A GRID-FORMING CONVERTER", and claims the priority of the Chinese patent application. The entire content of the Chinese patent application is hereby incorporated into the present invention.

### TECHNICAL FIELD

The present invention relates to the technical field of grid connection for new energy power generation, in particular to a method and an apparatus for suppressing transient stress for a grid-connection converter.

### BACKGROUND ART

A traditional power grid is mainly powered by a synchronous generator. A part of mechanical energy of a previous moter is converted into electrical energy, and the other part is stored in the rotor as kinetic energy. The rotational speed of the rotor will not suddenly change due to its inertia. If the power system is subject to disturbance, the rotor will absorb or release energy to keep the system stable and in balance, so that the synchronous generator has the ability to provide a support by inertia.

When the power grid is subject to phase disturbance, the synchronous generator also can provide phase-jump response power under the action of the damping winding. When the power grid is subject to voltage disturbance, the synchronous generator has a stable internal potential and thus can also provide transient reactive response to support the power-grid voltage

However, a new energy equipment such as a wind-power generator, a photovoltaic-power generator, etc. is basically composed by electronic components, and thus does not have mechanical inertia, resulting in a decline of ability in resisting system disturbances. A traditional wind-power converter and a photovoltaic inverter adopts a grid-connection mode using a grid-following control method, which uses a phase-locked loop to measure the voltage phase of a grid-connection point as the coordinate transformation reference, and in a synchronous rotating coordinate system uses a double closed-loop direct current to adjust the active power and reactive power exchanged between the converter and the AC power grid, so that the converter and the power grid are kept in synchronization. If the state of the power grid (such as frequency, phase, etc.) changes, the grid-following converter cannot respond using inertia.

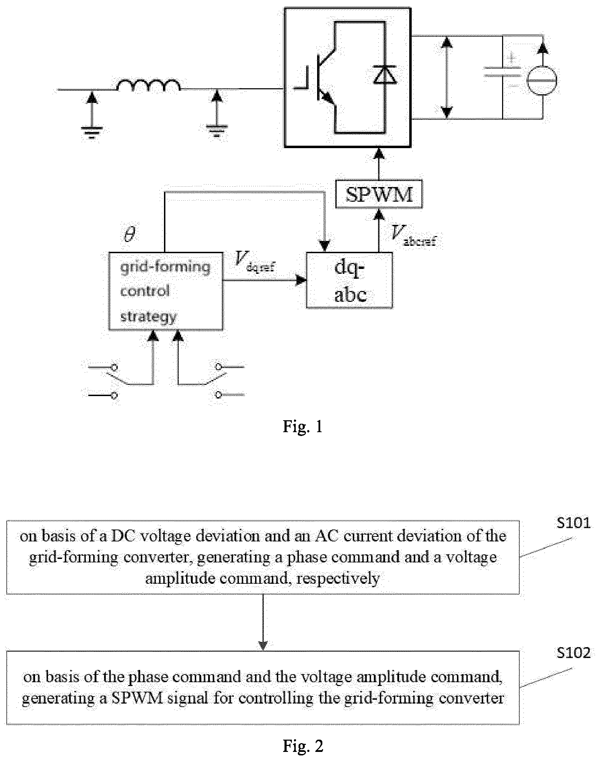

FIG. 1 shows an equivalent structure of a grid-forming converter connected to a power grid wherein a rectifier side is taken as equivalent to a DC current source. The grid-forming converter adopts a power-synchronization strategy, which is similar to that of a synchronous generator. When the frequency, the phase, or the voltage of the power changes, the converter can naturally provide transient active/reactive support response(s) for the system, through the relationship between the power angle and voltage, by controlling the output phase $\theta$ and the voltage amplitude $V_{abcref}$. Moreover, because the phase-locked loop is not used to synchronize with the power grid, the oscillation problem caused by it can be avoided to a large extent. Meanwhile, the inner current loop can be eliminated, thereby greatly reducing the risk of resonance.

However, the grid-forming converter has two prominent technical problems. The first is the problem of capacitor voltage exceeding the limit. In the situation that there is no additional energy storage, the energy that the grid-forming converter can use to perform inertial support, comes from the capacitor voltage inside the converter. Under more severe system disturbances, it requires more inertial support, and may cause a large deviation in DC voltage, and may trigger a protection action of the converter. The second is the problem of transient overcurrent. Since the equivalent circuit characteristic of the converter using grid-forming control is a controllable voltage source, there may be a problem of transient overcurrent when the system is subject to a too large disturbance.

### SUMMARY OF INVENTION

In order to overcome the above-mentioned shortcomings, the present invention provides a method and an apparatus for suppressing transient stress for a grid-forming converter.

In a first respect, a method for suppressing transient stress of a grid-forming converter is provided, the method comprises:

on basis of a DC voltage deviation and an AC current deviation of the grid-forming converter, generating a phase command and a voltage amplitude command, respectively;

on basis of the phase command and the voltage amplitude command, generating a sinusoidal pulse width modulation signal for controlling the grid-forming converter.

Preferably, the DC voltage deviation of the grid-forming converter is calculated as follows:

$$|E_{dcN}\text{-}E_{dc}|=\Delta E_{dc}$$

**wherein,** $E_{dc}$ is a measured value of DC voltage of the grid-forming converter, $E_{dcN}$ is a rated value of DC voltage of the grid-forming converter, $\Delta E_{dc}$ is the DC voltage deviation of the grid-forming converter.

Further, the step of generating the phase command on basis of the DC voltage deviation of the grid-forming converter includes:

if the DC voltage deviation of the grid-forming converter is greater than a first threshold, the phase command is generated as $\theta - \Delta\theta$, otherwise, the phase command is generated as $\theta$, wherein $\theta$ is an initial phase command generated by a grid-forming control strategy, $\Delta\theta$ is the phase deviation command.

Further, the phase deviation command is calculated as follows:

$$\Delta E_{dc} \times (K_{pdc} + K_{idc}/sT_{dc}) = \Delta\theta$$

wherein, $K_{pdc}$ is a proportional coefficient of a first pi controller, $K_{idc}$ is an integral coefficient of the first pi controller, $T_{dc}$ is a time constant of the first pi controller, $s$ is a Laplace operator.

Preferably, the AC current deviation of the grid-forming converter is calculated as follows:

$$Mag(i_{abc}) - Mag(I_{sN}) = Mag(\Delta I_s)$$

wherein, $Mag(i_{abc})$ is a measured value of AC current of the grid-forming converter, $Mag(I_{sN})$ is a rated value of AC current of the grid-forming converter, $Mag(\Delta I_s)$ is the AC current deviation of the grid-forming converter.

Further, the step of generating the voltage amplitude command on basis of the AC current deviation of the grid-forming converter includes:

if the AC current deviation of the grid-forming converter is greater than a second threshold, the voltage amplitude command is generated as $V'_{dqref} + \Delta V_{dqref}$, otherwise, the voltage amplitude command is generated as $V'_{dqref}$, wherein, $V'_{dqref}$ is an initial voltage amplitude command generated by a grid-forming control strategy, $\Delta V_{dqref}$ is an additional voltage regulation component of virtual reactance.

Further, the additional voltage regulation component of virtual reactance is calculated as follows:

$$Mag(\Delta I_s) \times (K_{p\theta} + K_{i\theta}/sT_{\theta}) = \Delta V_{dqref}$$

wherein, $K_{p\theta}$ is a proportional coefficient of a second pi controller, $K_{i\theta}$ is an integral coefficient of the second pi controller, $T_{\theta}$ is a time constant of the second pi controller.

Preferably, the step of generating the sinusoidal pulse width modulation signal for controlling the grid-forming converter on basis of the phase command and the voltage amplitude command includes:

on basis of the phase command, the voltage amplitude command is subjected to Park inverse transformation, to obtain a voltage reference vector in a three-phase stationary coordinate system;
the voltage reference vector in a three-phase stationary coordinate system is subjected to sinusoidal pulse width modulation, to obtain a sinusoidal pulse width modulation signal for controlling the grid-forming converter.

In a second respect, an apparatus for suppressing transient stress of a grid-forming converter is provided, the apparatus comprises:

a first generating module, configured to generate a phase command and a voltage amplitude command, on basis of a DC voltage deviation and an AC current deviation of the grid-forming converter, respectively; a second generating module, configured to generate a sinusoidal pulse width modulation signal for controlling the grid-forming converter, on basis of the phase command and the voltage amplitude command.

Preferably, that the DC voltage deviation of the grid-forming converter is calculated as follows:

$$|E_{dcN} - E_{dc}| = \Delta E_{dc}$$

wherein, $E_{dc}$ is a measured value of DC voltage of the grid-forming converter, $E_{dcN}$ is a rated value of DC voltage of the grid-forming converter, $\Delta E_{dc}$ is the DC voltage deviation of the grid-forming converter.

Further, the first generating module is configured to:

if the DC voltage deviation of the grid-forming converter is greater than a first threshold, the phase command is generated as $\theta - \Delta\theta$, otherwise, the phase command is generated as $\theta$, wherein $\theta$ is an initial phase command generated by a grid-forming control strategy, $\Delta\theta$ is the phase deviation command.

Further, the phase deviation command is calculated as follows:

$$\Delta E_{dc} \times (K_{pdc} + K_{idc}/sT_{dc}) = \Delta\theta$$

wherein, $K_{pdc}$ is a proportional coefficient of a first pi controller, $K_{idc}$ is an integral coefficient of the first pi controller, $T_{dc}$ is a time constant of the first pi controller, $s$ is a Laplace operator.

Preferably, the AC current deviation of the grid-forming converter is calculated as follows:

$$Mag(i_{abc}) - Mag(I_{sN}) = Mag(\Delta I_s)$$

wherein, $Mag(i_{abc})$ is a measured value of AC current of the grid-forming converter, $Mag(I_{sN})$ is a rated value of AC current of the grid-forming converter, $Mag(\Delta I_s)$ is the AC current deviation of the grid-forming converter.

Further, the first generating module is configured to:

if the AC current deviation of the grid-forming converter is greater than a second threshold, the voltage amplitude command is generated as $V'_{dqref} + \Delta V_{dqref}$, otherwise, the voltage amplitude command is generated as $V'_{dqref}$, wherein, $V'_{dqref}$ is an initial voltage amplitude command generated by a grid-forming control strategy, $\Delta V_{dqref}$ is an additional voltage regulation component of virtual reactance.

Further, the additional voltage regulation component of virtual reactance is calculated as follows:

$$Mag(\Delta I_s) \times (K_{p\theta} + K_{i\theta}/sT_\theta) = \Delta V_{dqref}$$

wherein, $K_{p\theta}$ is a proportional coefficient of a second pi controller, $K_{i\theta}$ is an integral coefficient of the second pi controller, $T_\theta$ is a time constant of the second pi controller.

Preferably, the second generating module is configured to:

on basis of the phase command, the voltage amplitude command is subjected to Park inverse transformation, to obtain a voltage reference vector in a three-phase stationary coordinate system;
the voltage reference vector in a three-phase stationary coordinate system is subjected to sinusoidal pulse width modulation, to obtain a sinusoidal pulse width modulation signal for controlling the grid-forming converter.

In a third respect, a computer device is provided, which comprises:

one or more processors;
the processor is configured to store one or more programs;
when the one or more programs are executed by the one or more processors, the method for suppressing transient stress for the grid-forming converter is implemented.

In a forth respect, a computer-readable storage medium is provided, in which a computer program/programs are stored, and when the computer program is executed, the method for suppressing transient stress for the grid-forming converter is implemented.

The above-mentioned one or more technical solutions of the present invention can achieve at least one or more of the following beneficial effects:
the present invention provides a method and an apparatus for suppressing transient stress for a grid-forming converter, comprising: on basis of a DC voltage deviation and an AC current deviation of the grid-forming converter, generating a phase command and a voltage amplitude command, respectively; on basis of the phase command and the voltage amplitude command, generating a sinusoidal pulse width modulation signal for controlling the grid-forming converter. The technical solution provided by the present invention can effectively suppress the DC capacitor voltage over-limit phenomenon and the transient over-current phenomenon that may occur in the process of responding to grid-side disturbances, without introducing an inner current loop control to the converter, and can effectively improve the operational adaptability of the grid-forming converter. The technical solution provided by the present invention is applicable to the scenarios like wind power, photovoltaic, energy storage system, or flexible DC transmission system, etc., and provides technical support for designing control systems in actual projects.

## DESCRIPTION OF DRAWINGS

FIG. 1 is an equivalent structural diagram of a grid-forming converter connected to a power grid in an embodiment of the present invention;
FIG. 2 is a schematic flow chart comprising main steps of a method for suppressing transient stress of a grid-forming converter in an embodiment of the present invention;
FIG. 3 is a trigger logic diagram of a suppressing strategy in an embodiment of the present invention;
FIG. 4 is an equivalent structural diagram of a grid-forming converter connected to a power grid with a strategy of suppressing transient stress in an embodiment of the present invention;
FIG. 5 is a diagram showing a response effect of a grid-forming control strategy without a suppressing measure in an embodiment of the present invention;
FIG. 6 is a diagram showing a response effect of a grid-forming control strategy with a suppressing measure in an embodiment of the present invention;
FIG. 7 is a main structural block diagram of an apparatus for suppressing transient stress for a grid-forming converter in an embodiment of the present invention.

## DETAILED EMBODIMENTS

The specific embodiments of the present invention will be further described in detail below with reference to the accompanying drawings.

In order to clarify the purpose, the technical solutions and the advantages of the embodiments of the present invention, the technical solutions in the embodiments of the present invention will be clearly and completely described below, with reference to the drawings accompanying the embodiments of the present invention. Evidently, the described embodiments are only a part of the embodiments of the present invention, rather than all of the embodiments. On the basis of the embodiments of the present invention, all other embodiments obtained by those skilled in the art without making creative efforts shall fall into the protection scope of the present invention.

As disclosed in the background art, a traditional power grid is mainly powered by a synchronous generator. A part of mechanical energy of a previous moter is converted into electrical energy, and the other part is stored in the rotor as kinetic energy. The rotational speed of the rotor will not suddenly change due to its inertia. If the power system is subject to disturbance, the rotor will absorb or release energy to keep the system stable and in balance, so that the synchronous generator has the ability to provide a support by inertia. When the power grid is subject to phase disturbance, the synchronous generator also can provide phase-jump response power under the action of the damping winding. When the power grid is subject to voltage disturbance, the synchronous generator has a stable internal potential and thus can also provide transient reactive response to support the power-grid voltage.

However, a new energy equipment such as a wind-power generator, a photovoltaic-power generator, etc., is basically composed by electronic components, and thus does not have mechanical inertia, resulting in a decline of ability in resisting system disturbances. A traditional wind-power converter and a photovoltaic inverter adopts a grid-connection mode using a grid-following control method, which uses a phase-locked loop to measure the voltage phase of a grid-connection point as the coordinate transformation reference, and in a synchronous rotating coordinate system uses a double closed-loop direct current to adjust the active power and reactive power exchanged between the converter and the AC power grid, so that the converter and the power grid are kept in synchronization. If the state of the power grid (such as frequency, phase, etc.) changes, the grid-following converter cannot respond using inertia.

FIG. 1 shows an equivalent structure of a grid-forming converter connected to a power grid wherein a rectifier side is taken as equivalent to a DC current source. The grid-forming converter adopts a power-synchronization strategy, which is similar to that of a synchronous generator. When the frequency, the phase, or the voltage of the power changes, the converter can naturally provide transient active/reactive support response(s) for the system, through the relationship between the power angle and voltage, by controlling the output phase $\theta$ and the voltage amplitude $V_{adcref}$. Moreover, because the phase-locked loop is not used to synchronize with the power grid, the oscillation problem caused by it can be avoided to a large extent. Meanwhile, the inner current loop can be eliminated, thereby greatly reducing the risk of resonance.

However, the grid-forming converter has two prominent technical problems. The first is the problem of capacitor voltage exceeding the limit. In the situation that there is no additional energy storage, the energy that the grid-forming converter can use to perform inertial support, comes from the capacitor voltage inside the converter. Under more severe system disturbances, it requires more inertial support, and may cause a large deviation in DC voltage, and may trigger a protection action of the converter. The second is the problem of transient overcurrent. Since the equivalent circuit characteristic of the converter using grid-forming control is a controllable voltage source, there may be a problem of transient overcurrent when the system is subject to a too large disturbance.

In order to solve the above-mentioned problems, the present invention provides a method and an apparatus for suppressing transient stress for a grid-forming converter, comprising: on basis of a DC voltage deviation of the grid-forming converter, generating a phase command; on basis of AC current deviation of the grid-forming converter, generating a voltage amplitude command; on basis of the phase command and the voltage amplitude command, generating a sinusoidal pulse width modulation signal for controlling the grid-forming converter. The technical solution provided by the present invention can effectively suppress the DC capacitor voltage over-limit phenomenon and the transient over-current phenomenon that may occur in the process of responding to grid-side disturbances, without introducing an inner current loop control to the converter, and can effectively improve the operational adaptability of the grid-forming converter. The technical solution provided by the present invention is applicable to the scenarios like wind power, photovoltaic, energy storage system, or flexible DC transmission system, etc., and provides technical support for designing control systems in actual projects. The above solution is described in detail below.

## EMBODIMENT 1

With reference to FIG. 2 , FIG. 2 is a schematic flow chart comprising main steps of a method for suppressing transient stress for a grid-forming converter in an embodiment of the present invention. As shown in FIG. 2 , the method for suppressing the transient stress for a grid-forming converter in the embodiment of the present invention mainly includes the following steps:

step S101: on basis of a DC voltage deviation and an AC current deviation of the grid-forming converter, generating a phase command and a voltage amplitude command, respectively;
step S102: on basis of the phase command and the voltage amplitude command, generating a sinusoidal pulse width modulation signal for controlling the grid-forming converter.

In the embodiment, the DC voltage deviation of the grid-forming converter is calculated as follows:

$$|E_{dcN}-E_{dc}|=\Delta E_{dc}$$

wherein, $E_{dc}$ is a measured value of DC voltage of the grid-forming converter, $E_{dcN}$ is a rated value of DC voltage of the grid-forming converter, $\Delta E_{dc}$ is the DC voltage deviation of the grid-forming converter.

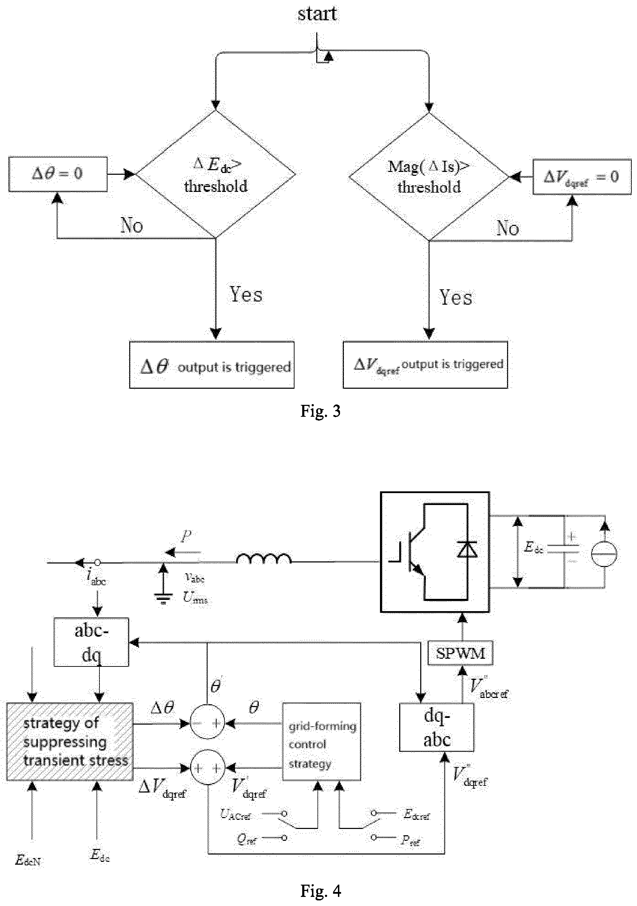

In an embodiment, as shown in FIG. 3, the phase deviation command $\Delta\theta$ is adjusted and generated. $\Delta\theta$ is output to the control system only if $\Delta E_{dc}$ is greater than threshold, otherwise the output is configured to 0. Therefore, the step of generating the phase command on basis of the DC voltage deviation of the grid-forming converter includes:

if the DC voltage deviation of the grid-forming converter is greater than a first threshold, the phase command is generated as $\theta$ -$\Delta\theta$, otherwise, the phase command is generated as $\theta$, wherein $\theta$ is an initial phase command generated by a grid-forming control strategy, $\Delta\theta$ is the phase deviation command.

In an embodiment, the phase deviation command is calculated as follows:

$$\Delta E_{dc} \times (K_{pdc} + K_{idc}/sT_{dc}) = \Delta\theta$$

wherein, $K_{pdc}$ is a proportional coefficient of a first pi controller, $K_{idc}$ is an integral coefficient of the first pi controller, $T_{dc}$ is a time constant of the first pi controller, $s$ is a Laplace operator.

In the embodiment, the AC current deviation of the grid-forming converter is calculated as follows:

$$Mag(i_{abc}) - Mag(I_{sN}) = Mag(\Delta I_s)$$

wherein, $Mag(i_{abc})$ is a measured value of AC current of the grid-forming converter, $Mag(I_{sN})$ is a rated value of AC current of the grid-forming converter, $Mag(\Delta I_s)$ is the AC current deviation of the grid-forming converter.

In an embodiment, as shown in FIG. 3, only when the current deviation $Mag(\Delta I_s)$ is greater than the threshold value, $\Delta V_{dqref}$ is output to the control system, otherwise the output is configured to 0. Therefore, the step of generating the voltage amplitude command on basis of the AC current deviation of the grid-forming converter includes:

if the AC current deviation of the grid-forming converter is greater than a second threshold, the voltage amplitude command is generated as $V'_{dqref} + \Delta V_{dqref}$, otherwise, the voltage amplitude command is generated as $V'_{dqref}$, wherein, $V'_{dqref}$ is an initial voltage amplitude command generated by a grid-forming control strategy, $\Delta V_{dqref}$ is an additional voltage regulation component of virtual reactance.

In an embodiment, the additional voltage regulation component of virtual reactance is calculated as follows:

$$Mag(\Delta I_s) \times (K_{p\theta} + K_{i\theta}/sT_\theta) = \Delta V_{dqref}$$

wherein, $K_{p\theta}$ is a proportional coefficient of a second pi controller, $K_{i\theta}$ is an integral coefficient of the second pi controller, $T_\theta$ is a time constant of the second pi controller.

In the embodiment, the step of generating the sinusoidal pulse width modulation signal for controlling the grid-forming converter on basis of the phase command and the voltage amplitude command includes:

on basis of the phase command, the voltage amplitude command is subjected to Park inverse transformation, to obtain a voltage reference vector in a three-phase stationary coordinate system;
the voltage reference vector in a three-phase stationary coordinate system is subjected to sinusoidal pulse width modulation, to obtain a sinusoidal pulse width modulation signal for controlling the grid-forming converter.

On basis of the above-mentioned solution and the equivalent structure of the grid-forming converter connected to the power grid as shown in FIG. 1, the present invention provides an optimal implementation. The equivalent structure of the grid-forming converter connected to the power grid as shown in FIG. 1 is added by the strategy of suppressing transient stress of the grid-forming converter provided by the present invention, i.e., the strategy of suppressing transient stress, the equivalent structure is shown as FIG. 4, the grid-forming control strategy is used to adjust the phase of the converter output to provide support for inertial energy, the voltage amplitude is controlled to provide support for AC voltage and reactive power. When the AC system on the inverter side is subject to disturbance, and the extent of DC voltage drop or the level of AC current exceeds a safety margin setting, the strategy of suppressing transient stress will be triggered. On basis of output $\theta$ of the grid-forming strategy, the corrected phase $\theta'$ is obtained by applying an additional phase regulation component $\Delta\theta$ so as to corrects the active response amplitude to suppress the DC voltage from exceeding the limit. At this moment, the controller outputs a new voltage command $V_{dqref}$ according to $\theta'$. On this basis, the additional voltage regulation component $\Delta V_{dqref}$ of the d, q axis virtual reactance is introduced to obtain the corrected $V''_{dqref}$, so as to suppress the overcurrent.

In the equivalent structure shown in FIG. 4, an additional control trigger logic and a strategy framework, which do not rely on an inner current loop to suppress DC voltage over-limit and AC overcurrent, are constructed, and can be coordinated with the grid-forming control strategy to achieve active inertial support, so as to avoid the converter from being triggered into protection action due to transient impact.

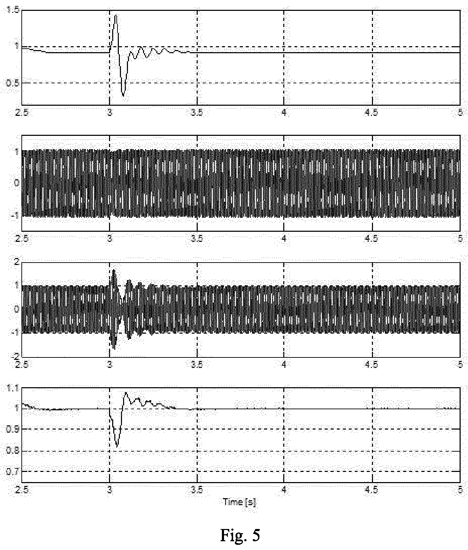

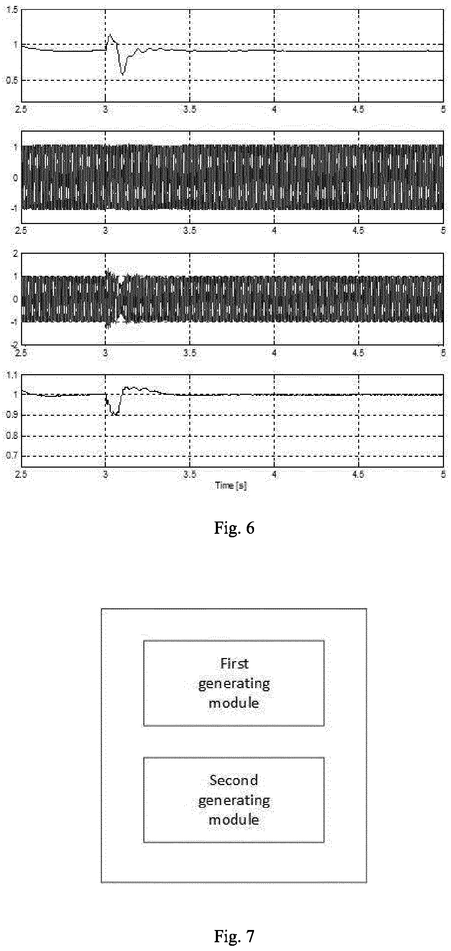

As shown in FIG. 5 and FIG. 6, PSCAD/EMTDC is used in modeling and analyzing, and the effectiveness of the control strategy is verified. From top to bottom, the figures show the active power $P$ of the grid connection point, the transient value $v_{abc}$ and the effective value $U_{rms}$ of the AC voltage, the transient value $i_{abc}$ of the AC current, and the DC port voltage $E_{dc}$ of the inverter.

By comparing FIG. 5 with FIG. 6, it can be seen that after adopting the strategy of suppressing transient stress, the amplitude of DC voltage drop value is reduced, the minimum value changes from 0.82 p.u. to 0.9 p.u., and the reverse impact during the DC voltage recovery process after the response is completed is also reduced from 1.105 p.u. to 1.07 p.u.. The peak value of the impact current when disturbed is also reduced from 1.6 p.u. to 1.13 p.u.. As above, the simulation results show that the strategy of suppressing transient stress provided in the present invention is effective in specific engineering scenarios.

## EMBODIMENT 2

Based on the same inventive concept, the present invention also provides an apparatus for suppressing transient stress for a grid-forming converter. As shown in FIG. 7, the apparatus for suppressing transient stress for a grid-forming converter comprises:

> a first generating module, configured to generate a phase command and a voltage amplitude command, on basis of a DC voltage deviation and an AC current deviation of the grid-forming converter, respectively;
> a second generating module, configured to generate a sinusoidal pulse width modulation signal for controlling the grid-forming converter, on basis of the phase command and the voltage amplitude command.

Preferably, the DC voltage deviation of the grid-forming converter is calculated as follows:

$$|E_{dcN}-E_{dc}|=\Delta E_{dc}$$

wherein, $E_{dc}$ is a measured value of DC voltage of the grid-forming converter, $E_{dcN}$ is a rated value of DC voltage of the grid-forming converter, $\Delta E_{dc}$ is the DC voltage deviation of the grid-forming converter.

Further, the first generating module is configured to:
if the DC voltage deviation of the grid-forming converter is greater than a first threshold, the phase command is generated as $\theta -\Delta\theta$, otherwise, the phase command is generated as $\theta$, wherein $\theta$ is an initial phase command generated by a grid-forming control strategy, $\Delta\theta$ is the phase deviation command.

Futher, the phase deviation command is calculated as follows:

$$\Delta E_{dc}\times(K_{pdc}+K_{idc}/sT_{dc})= \Delta\theta$$

wherein, $K_{pdc}$ is a proportional coefficient of a first pi controller, $K_{idc}$ is an integral coefficient of the first pi controller, $T_{dc}$ is a time constant of the first pi controller, $s$ is a Laplace operator.

Preferably, the AC current deviation of the grid-forming converter is calculated as follows:

$$Mag(i_{abc})- Mag(I_{sN})= Mag(\Delta I_s)$$

wherein, $Mag(i_{abc})$ is a measured value of AC current of the grid-forming converter, $Mag(I_{sN})$ is a rated value of AC current of the grid-forming converter, $Mag(\Delta I_s)$ is the AC current deviation of the grid-forming converter.

Further, the first generating module is configured to:
if the AC current deviation of the grid-forming converter is greater than a second threshold, the voltage amplitude command is generated as $V'_{dqref}+\Delta V_{dqref}$, otherwise, the voltage amplitude command is generated as $V'_{dqref}$, wherein, $V'_{dqref}$ is an initial voltage amplitude command generated by a grid-forming control strategy, $\Delta V_{dqref}$ is an additional voltage regulation component of virtual reactance.

Further, the additional voltage regulation component of virtual reactance is calculated as follows:

$$Mag(\Delta I_s)\times(K_{p\theta}+K_{i\theta}/sT_\theta)= \Delta V_{dqref}$$

wherein, $K_{p\theta}$ is a proportional coefficient of a second pi controller, $K_{i\theta}$ is an integral coefficient of the second pi controller, $T_\theta$ is a time constant of the second pi controller.

Preferably, the second generating module is configured to:

> on basis of the phase command, the voltage amplitude command is subjected to Park inverse transformation, to obtain a voltage reference vector in a three-phase stationary coordinate system;
> the voltage reference vector in a three-phase stationary coordinate system is subjected to sinusoidal pulse width modulation, to obtain a sinusoidal pulse width modulation signal for controlling the grid-forming converter.

## EMBODIMENT 3

Based on the same inventive concept, the present invention also provides a computer device, comprising a processor and a memory, wherein the memory is configured to store a computer program. The computer program comprises program instructions. The processor is configured to execute the program instructions stored in the computer storage medium. The processor may be a central processing unit (CPU), or may also be another general-purpose processor, a digital signal processor (DSP), an application specific integrated circuit (ASIC), a field-programmable gate array (FPGA) or another programmable logic device, a discrete gate or transistor logic device, or discrete hardware components, etc. The processor is the computing core and control core of the terminal. The processor is configured to implement one or more instructions, in particular to load and execute one or more instructions in the computer storage medium, to implement the corresponding method flow or to achieve corresponding functions, thereby implementing the steps of the method for suppressing transient stress of a grid-forming converter in the above-mentioned embodiment.

## EMBODIMENT 4

Based on the same inventive concept, the present invention also provides a storage medium, in particular to a computer-readable storage medium (Memory). The computer-readable storage medium (Memory) is a memory device in a computer device for storing programs and data. It can be understood that the computer-readable storage medium here may include a built-in storage medium in the computer device or include an extended storage medium supported by the computer device. The computer-readable storage medium provides a storage space, which stores the operating system of the terminal. Moreover, one or more instructions that can be loaded and executed by the processor are also stored in the storage space, and these instructions may be one or more computer programs (including program codes). It should be noted that the computer-readable storage medium here may be a high-speed RAM memory or a non-volatile memory, such as at least one disk memory. The processor can load and execute one or more instructions stored in the computer-readable storage medium to implement the steps of the method for suppressing transient stress of the grid-forming converter in the above-mentioned embodiment.

It should be understood by those skilled in the art that embodiments of the present invention may be provided as methods, systems, or computer program products. Therefore, the present invention may be implemented in a form of a complete hardware, a complete software, or a combination of software and hardware. Furthermore, the present invention may take a form of a computer program product implemented on one or more computer-usable storage media (including but not limited to disk storage, CD-ROM, optical storage, etc.) containing computer-usable program codes.

The present invention is described with reference to methods, devices (systems), flowcharts and/or block diagrams of computer program products according to the embodiments of the present invention. It should be understood that each step in the flowcharts and/or each block in the block diagrams, as well as each combination of the steps in the flowcharts and/or of the blocks in the block diagrams, can be implemented by computer program instructions. These computer program instructions can be provided to a processor like a general-purpose computer, a special-purpose computer, an embedded processor, or another programmable data-processing device, to form a machine, so that an apparatus for achieving the functions specified in one or more steps in the flowcharts and/or one or more blocks in the block diagrams is obtained through executing the instructions by a processor of a computer or of another programmable data-processing device.

These computer program instructions may also be stored in a computer-readable memory which can guide a computer or another programmable data-processing device to work in a specific manner, so that the instructions stored in the computer-readable memory bring a product comprising an instruction apparatus, which achieve the function(s) specified in one or more steps in the flowcharts and/or one or more blocks in the block diagrams.

These computer program instructions may also be loaded to a computer or another programmable data-processing device, so that a series of operation steps are executed in the computer or in another programmable device, to generate computer-implemented processing, whereby the instructions executed in the computer or in another programmable device provide steps for achieving the function(s) specified in one or more steps in the flowcharts and/or one or more blocks in the block diagrams.

Finally, it should be noted that the above-mentioned embodiments are only for the purpose of describing the technical solutions of the present invention and are not intended to limit the present invention. Although the present invention has been described in detail with reference to the above-mentioned embodiments, those skilled in the art should understand that specific embodiments of the present invention can be modified or replaced with equivalents. Any modification or equivalent replacement that does not depart from the spirit or the scope of the present invention should fall into the protection scope of the claims of the present invention.

## INDUSTRIAL APPLICABILITY

The present invention relates to the technical field grid connection for new energy power generation, and particularly provides a method and an apparatus for suppressing transient stress for a grid-connection converter, comprising: on basis of a DC voltage deviation and an AC current deviation of the grid-forming converter, generating a phase command and a voltage amplitude command, respectively; on basis of the phase command and the voltage amplitude command, generating a sinusoidal pulse width modulation signal for controlling the grid-forming converter. The technical solution provided by the present invention can ensure the system stability of the grid-forming converter and effectively deal with the problems of DC voltage over-limit and transient over-current of the system that may occur during a transient response.

## Claims

1. A method for suppressing transient stress for a grid-forming converter, **characterized in that** the method comprises

   on basis of a DC voltage deviation and an AC current deviation of the grid-forming converter, generating a phase command and a voltage amplitude command, respectively;
   on basis of the phase command and the voltage amplitude command, generating a sinusoidal pulse width modulation signal for controlling the grid-forming converter.

2. The method according to claim 1, **characterized in that** the DC voltage deviation of the grid-forming converter is calculated as follows:

   $$|E_{dcN}\text{-}E_{dc}|=\Delta E_{dc}$$

   Wherein, $E_{dc}$ is a measured value of DC voltage of the grid-forming converter, $E_{dcN}$ is a rated value of DC voltage of the grid-forming converter, $\Delta E_{dc}$ is the DC voltage deviation of the grid-forming converter.

3. The method according to claim 2, **characterized in that** the step of generating the phase command on basis of the DC voltage deviation of the grid-forming converter includes
   if the DC voltage deviation of the grid-forming converter is greater than a first threshold, the phase command is generated as $\theta$ -$\Delta\theta$, otherwise, the phase command is generated as $\theta$, wherein $\theta$ is an initial phase command generated by a grid-forming control strategy, $\Delta\theta$ is the phase deviation command.

4. The method according to claim 3, **characterized in that** the phase deviation command is calculated as follows:

   $$\Delta E_{dc}\times(K_{pdc}+K_{idc}/sT_{dc})=\Delta\theta$$

   wherein, $K_{pdc}$ is a proportional coefficient of a first pi controller, $K_{idc}$ is an integral coefficient of the first pi controller, $T_{dc}$ is a time constant of the first pi controller, $s$ is a Laplace operator.

5. The method according to claim 1, **characterized in that** the AC current deviation of the grid-forming converter is calculated as follows:

   $$Mag(i_{abc})\text{-} Mag(I_{sN})= Mag(\Delta I_s)$$

   wherein, $Mag(i_{abc})$ is a measured value of AC current of the grid-forming converter, $Mag(I_{sN})$ is a rated value of AC current of the grid-forming converter, $Mag(\Delta I_s)$ is the AC current deviation of the grid-forming converter.

6. The method according to claim 5, **characterized in that** the step of generating the voltage amplitude command on basis of the AC current deviation of the grid-forming converter includes
   if the AC current deviation of the grid-forming converter is greater than a second threshold, the voltage amplitude command is generated as $V'_{dqref}$ + $\Delta V_{dqref}$, otherwise, the voltage amplitude command is generated as $V'_{dqref}$, wherein, $V'_{dqref}$ is an initial voltage amplitude command generated by a grid-forming control strategy, $\Delta V_{dqref}$ is an additional voltage regulation component of virtual reactance.

7. The method according to claim 6, **characterized in that** the additional voltage regulation component of virtual reactance is calculated as follows:

   $$Mag(\Delta I_s)\times(K_{p\theta}+K_{i\theta}/sT_\theta)= \Delta V_{dqref}$$

   wherein, $K_{p\theta}$ is a proportional coefficient of a second pi controller, $K_{i\theta}$ is an integral coefficient of the second pi controller, $T_\theta$ is a time constant of the second pi controller.

8. The method according to claim 1, **characterized in that** the step of generating the sinusoidal pulse width modulation signal for controlling the grid-forming converter on basis of the phase command and the voltage amplitude command includes:

   on basis of the phase command, the voltage amplitude command is subjected to Park inverse transformation, to obtain a voltage reference vector in a three-phase stationary coordinate system;
   the voltage reference vector in a three-phase stationary coordinate system is subjected to sinusoidal pulse width modulation, to obtain a sinusoidal pulse width modulation signal for controlling the grid-forming converter.

9. An apparatus for suppressing transient stress for a grid-forming converter, **characterized in that** the apparatus comprises

   a first generating module, configured to generate a phase command and a voltage amplitude command, on basis of a DC voltage deviation and an AC current deviation of the grid-forming converter, respectively;
   a second generating module, configured to generate a sinusoidal pulse width modulation signal for controlling the grid-forming converter, on basis of the phase command and the voltage amplitude command.

10. The apparatus according to claim 9, **characterized in that** the DC voltage deviation of the grid-forming converter is calculated as follows:

$$|E_{dcN}\text{-}E_{dc}|=\Delta E_{dc}$$

Wherein, $E_{dc}$ is a measured value of DC voltage of the grid-forming converter, $E_{dcN}$ is a rated value of DC voltage of the grid-forming converter, $\Delta E_{dc}$ is the DC voltage deviation of the grid-forming converter.

11. The apparatus according to claim 10, **characterized in that** the first generating module is configured to if the DC voltage deviation of the grid-forming converter is greater than a first threshold, the phase command is generated as $\theta$ -$\Delta\theta$, otherwise, the phase command is generated as $\theta$, wherein $\theta$ is an initial phase command generated by a grid-forming control strategy, $\Delta\theta$ is the phase deviation command.

12. The apparatus according to claim 11, **characterized in that** the phase deviation command is calculated as follows:

$$\Delta E_{dc}\times(K_{pdc}+K_{idc}/sT_{dc})=\Delta\theta$$

wherein, $K_{pdc}$ is a proportional coefficient of a first pi controller, $K_{idc}$ is an integral coefficient of the first pi controller, $T_{dc}$ is a time constant of the first pi controller, $s$ is a Laplace operator.

13. The apparatus according to claim 9, **characterized in that** the AC current deviation of the grid-forming converter is calculated as follows:

$$Mag(i_{abc})\text{- }Mag(I_{sN})= Mag(\Delta I_{s})$$

wherein, $Mag(i_{abc})$ is a measured value of AC current of the grid-forming converter, $Mag(I_{sN})$ is a rated value of AC current of the grid-forming converter, $Mag(\Delta I_{s})$ is the AC current deviation of the grid-forming converter.

14. The apparatus according to claim 13, **characterized in that** the first generating module is configured to if the AC current deviation of the grid-forming converter is greater than a second threshold, the voltage amplitude command is generated as $V'_{dqref}$ + $\Delta V_{dqref}$, otherwise, the voltage amplitude command is generated as $V'_{dqref}$, wherein, $V'_{dqref}$ is an initial voltage amplitude command generated by a grid-forming control strategy, $\Delta V_{dqref}$ is an additional voltage regulation component of virtual reactance.

15. The apparatus according to claim 14, **characterized in that** the additional voltage regulation component of virtual reactance is calculated as follows:

$$Mag(\Delta I_{s})\times(K_{p\theta}+K_{i\theta}/sT_{\theta})= \Delta V_{dqref}$$

wherein, $K_{p\theta}$ is a proportional coefficient of a second pi controller, $K_{i\theta}$ is an integral coefficient of the second pi controller, $T_{\theta}$ is a time constant of the second pi controller.

16. The apparatus according to claim 9, **characterized in that** the second generating module is configured to

on basis of the phase command, the voltage amplitude command is subjected to Park inverse transformation, to obtain a voltage reference vector in a three-phase stationary coordinate system;
the voltage reference vector in a three-phase stationary coordinate system is subjected to sinusoidal pulse width modulation, to obtain a sinusoidal pulse width modulation signal for controlling the grid-forming converter.

17. A computer device, **characterized in** comprising

one or more processors;
the processor is configured to store one or more programs;
when the one or more programs are executed by the one or more processors, the method for suppressing transient stress for the grid-forming converter according to any one of claims 1 to 8 is implemented.

18. A computer-readable storage medium, **characterized in** storing a computer program, and when the computer program is executed, the method for suppressing transient stress for the grid-forming converter according to any one of claims 1 to 8 is implemented.

θ

grid-forming
control
strategy

$V_{dqref}$

dq-
abc

$V_{abcref}$

SPWM

Fig. 1

| | S101 |
|---|---|
| on basis of a DC voltage deviation and an AC current deviation of the grid-forming converter, generating a phase command and a voltage amplitude command, respectively | |

| | S102 |
|---|---|
| on basis of the phase command and the voltage amplitude command, generating a SPWM signal for controlling the grid-forming converter | |

Fig. 2

start

$\Delta\theta = 0$

$\Delta E_{dc} >$ threshold

No

Yes

$\Delta\theta$ output is triggered

Mag($\Delta$Is)$>$ threshold

No

$\Delta V_{dqref} = 0$

Yes

$\Delta V_{dqref}$ output is triggered

Fig. 3

abc-dq

strategy of suppressing transient stress

$\Delta\theta$

$\theta'$

$\theta$

grid-forming control strategy

dq-abc

SPWM

$V''_{abcref}$

$\Delta V_{dqref}$

$V'_{dqref}$

$V''_{dqref}$

$U_{ACref}$

$Q_{ref}$

$E_{dcref}$

$P_{ref}$

$E_{dcN}$

$E_{dc}$

$P$

$v_{abc}$

$U_{rms}$

$i_{abc}$

$E_{dc}$

Fig. 4

Fig. 5

Fig. 6

Fig. 7

## INTERNATIONAL SEARCH REPORT

| International application No. |
|---|
| **PCT/CN2023/114496** |

| **A.** | **CLASSIFICATION OF SUBJECT MATTER** |
|---|---|

H02J3/36(2006.01)i; H02J3/38(2006.01)i

According to International Patent Classification (IPC) or to both national classification and IPC

| **B.** | **FIELDS SEARCHED** |
|---|---|

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 构网型, 换流器, 换流站, 直流电压, 直流侧电压, 交流电流, 交流侧电流, 差值, 偏差, 相位, 脉宽调制, grid-structured, grid-type converter, dc voltage, ac current, deviation, phase, pulse width modulation

| **C.** | **DOCUMENTS CONSIDERED TO BE RELEVANT** | | |
|---|---|---|---|
| Category* | Citation of document, with indication, where appropriate, of the relevant passages | Relevant to claim No. |
| PX | CN 115549167 A (SMART GRID RESEARCH INSTITUTE CO., LTD. OF STATE GRID et al.) 30 December 2022 (2022-12-30) claims 1-18, description, paragraphs 6-55, and figures 1-7 | 1-18 |
| X | CN 114884105 A (NANTONG UNIVERSITY) 09 August 2022 (2022-08-09) description, paragraphs 34-56, and figure 1 | 1-18 |
| A | CN 113962181 A (XI'AN JIAOTONG UNIVERSITY) 21 January 2022 (2022-01-21) entire document | 1-18 |
| A | CN 114614494 A (HUAZHONG UNIVERSITY OF SCIENCE AND TECHNOLOGY et al.) 10 June 2022 (2022-06-10) entire document | 1-18 |
| A | JP H09149646 A (HITACHI LTD.) 06 June 1997 (1997-06-06) entire document | 1-18 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2023** | **17 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/114496**

| Patent document cited in search report | | | Publication date (day/month/year) | Patent family member(s) | | | Publication date (day/month/year) |
|---|---|---|---|---|---|---|---|
| CN | 115549167 | A | 30 December 2022 | None | | | |
| CN | 114884105 | A | 09 August 2022 | CN | 114884105 | B | 27 December 2022 |
| CN | 113962181 | A | 21 January 2022 | None | | | |
| CN | 114614494 | A | 10 June 2022 | None | | | |
| JP | H09149646 | A | 06 June 1997 | JP | 3261952 | B2 | 04 March 2002 |

Form PCT/ISA/210 (patent family annex) (July 2022)

**REFERENCES CITED IN THE DESCRIPTION**

**Patent documents cited in the description**

- CN 202211055129